# EUROPEAN PATENT APPLICATION

(11) **EP 4 053 995 A1**
(43) Date of publication of application: **07.09.2022**
(21) Application number: 20881540.7
(22) Date of filing: 30.10.2020
(51) Int. Cl.: H01Q 1/04

(54) **HOUSING UNIT**

(30) Priority: 30.10.2019 JP 2019197200
(71) Applicant: Furukawa Electric Co., Ltd., Tokyo 100-8322 (JP)
(72) Inventor: MITSUHASHI Yuito, Tokyo 100-8322 (JP); HAMADA Hiroki, Tokyo 100-8322 (JP); HATTORI Nobuhiko, Tokyo 100-8322 (JP); KAGIMOTO Taishi, Tokyo 100-8322 (JP); MOCHIZUKI Takahiro, Tokyo 100-8322 (JP)
(74) Representative: Winter, Brandl - Partnerschaft mbB
(86) International application number: PCT/JP2020/040922
(87) International publication number: WO 2021/085626

(57) **Abstract**

Provided is a housing unit that is capable of effectively minimizing failure occurrence or degradation of radio wave properties, in a wireless communication device, resulting from being affected by water. This housing unit is provided with: a first resin container 10 that houses therein a wireless base station 8 to which a cable 6, 7 is connected; and a second resin container 20 that is disposed anterior or posterior to the first resin container 10 in the direction in which the cable 6, 7 extends, and that has the interior thereof connected with the interior of the first resin container 10. The first resin container 10 is provided with a drainage part 15 comprising: a crown section 15c that has a height position higher than a boundary portion 31 and a boundary portion 32 with the second resin container 20; and a curved surface 15a and a curved surface 15b where the height position becomes increasingly lower from the crown section 15c towards the boundary portion 31 and the boundary portion 32, and meanwhile, the second resin container 20 has a drain-receiving part 25 which has a height position lower than the boundary portion 31 and the boundary portion 32, and which is for receiving drainage water from the drainage part 15.

## Description

### TECHNICAL FIELD

The present invention relates to a housing unit including containers for housing a cable.

### BACKGROUND ART

A technique to bury a wireless communication device for use as a wireless base station or the like in the ground has been known. Techniques of this type are disclosed in, for example, Patent Documents 1 and 2.

Patent Document 1 discloses a ground burial type antenna device adapted to be disposed below a lid and equipped with an installation base having a height adjustment mechanism for adjusting the distance from an antenna element to the lid.

Patent Document 2 discloses an antenna device adapted to be installed in an underground space such as a manhole or handhole, and a communication device connected to the antenna device. This antenna device is installed such that the main axis of a radiation beam passes through the boundary between the inner peripheral surface of the underground space and a support, or between the outer peripheral surface of the support and the ground.

Patent Document 1: PCT International Publication No. WO2015/156096
Patent Document 2: PCT International Publication No. WO2019/039598

### DISCLOSURE OF THE INVENTION

### Problems to be Solved by the Invention

When a wireless communication device buried in the ground is exposed to, or submerged in, water such as rainwater, the wireless communication device may be affected by the water resulting in a risk of degradation of the radio wave characteristics and a risk of failure of the wireless communication device. However, Patent Document 1 does not disclose a configuration for draining water such as rainwater. Patent Document 2 discloses a configuration in which drain holes are formed in the bottom of the manhole where the antenna device is housed. However, this is not considered to be a sufficient drainage structure, and there is concern that water may accumulate in the manhole and come into contact with the antenna device.

In view of the foregoing circumstances, it is an object of the present invention to provide a housing unit capable of effectively reducing or preventing degradation of radio wave characteristics of a wireless communication device and failure of the wireless communication device, which can be caused by adverse effects of water.

### Means for Solving the Problems

A first aspect of the present invention is directed to a housing unit including resin containers for housing a cable. The resin containers include: a first resin container configured to house a wireless communication device to which the cable is connected; and a second resin container configured to be disposed in front of or behind the first resin container in a direction in which the cable extends, and having an interior space that is adapted to communicate with an interior space of the first resin container. The first resin container includes a drain portion having a crest and a height varying portion, the crest being at a height greater than that of a boundary portion between the first resin container and the second resin container, the height varying portion decreasing in height throughout from the crest to the boundary portion. The second resin container includes a drain water-receiving portion that receives drain water from the drain portion, the drain water-receiving portion being at a height less than that of the boundary portion.

A second aspect of the present invention is an embodiment of the first aspect. In the second aspect, the first resin container further includes a first container body and a first lid, the first container body having a first bottom and a first opening that opens upward, the first lid closing the first opening of the first container body. The second resin container further includes a second container body and a second lid, the second container body having a second bottom and a second opening that opens upward, the second lid closing the second opening of the second container body. In a state where the second resin container is disposed in front of or behind the first resin container in the direction in which the cable extends, the boundary portion is provided between the first bottom and the second bottom. The first bottom has the drain portion, and the second bottom has the drain water-receiving portion.

A third aspect of the present invention is an embodiment of the first aspect. In the third aspect, the first resin container further includes a first container body and a first lid, the first container body having a first bottom and a first opening that opens upward, the first lid closing the first opening of the first container body. The second resin container further includes a second container body and a second lid, the second container body having a second bottom and a second opening that opens upward, the second lid closing the second opening of the second container body. In a state where the second resin container is disposed in front of or behind the first resin container in the direction in which the cable extends, the boundary portion is provided between the first lid and the second lid. The first lid has the drain portion, and the second lid has the drain water-receiving portion.

A fourth aspect of the present invention is an embodiment of the second aspect. In the fourth aspect, the wireless communication device is placed on the crest of the drain portion.

A fifth aspect of the present invention is an embodiment of the second or third aspect. In the fifth aspect, the first resin container further includes a support that is spaced upwardly from the first bottom, and the wireless communication device is supported by the support while being housed in a waterproof case.

A sixth aspect of the present invention is an embodiment of the second or third aspect. In the sixth aspect, the first lid has a housing chamber configured to house and seal the wireless communication device in a liquid-tight manner, and the wireless communication device is housed in the housing chamber.

### Effects of the Invention

The present invention can effectively reduce or preventing degradation of the radio wave characteristics of the wireless communication device and failure of the wireless communication device, which can be caused by adverse effects of water.

### BRIEF DESCRIPTION OF THE DRAWINGS

FIG. 1 is a diagram schematically illustrating a housing unit according to a first embodiment of the present invention and a road where the housing unit is installed;
FIG. 2 is a schematic diagram illustrating a wireless communication system including a wireless communication device according to the first embodiment;
FIG. 3 is a front cross-sectional view of the housing unit according to the first embodiment, taken along arrows III-III in FIG. 4;
FIG. 4 is a cross-sectional view taken along arrows IV-IV in FIG. 3;
FIG. 5 is a front cross-sectional view of a housing unit according to a second embodiment of the present invention, taken along arrows V-V in FIG. 6;
FIG. 6 is a cross-sectional view taken along arrows VI-VI in FIG. 5;
FIG. 7 illustrates a first modification of the first embodiment, and is a side cross-sectional view of a first resin container;
FIG. 8 illustrates a second modification of the first embodiment, and is a side cross-sectional view of a first resin container; and
FIG. 9 illustrates a third modification of the first embodiment, and is a side cross-sectional view of a first resin container.

### PREFERRED MODE FOR CARRYING OUT THE INVENTION

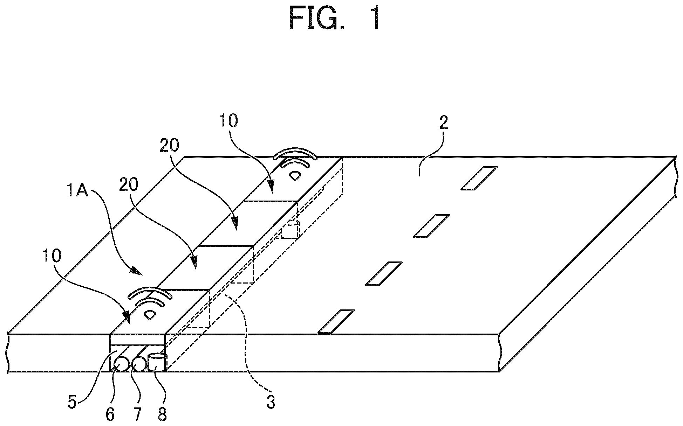

Embodiments of the present invention will be described below with reference to the drawings. FIG. 1 is a diagram schematically illustrating a housing unit 1A according to the present invention. The housing unit 1A includes resin containers for housing cables. The cables include, for example, a power transmission cable (a power line 7 to be described later) that transmits electric power to households, etc., and a communication transmission cable (a communication line 6 to be described later) that transmits information. The housing unit 1A includes a plurality first resin containers 10 that have a polygonal tubular shape and are arranged at predetermined intervals in a gutter 3 of a road 2, and a plurality of second resin containers 20 that have a polygonal tubular shape and are disposed between the first resin containers 10. As will be described in detail later, the first resin container 10 houses a wireless base station to which the cables are connected. The housing unit 1A is laid such that each first resin container 10 is disposed at a location where the wireless base station is to be installed and each second resin container 20 is disposed in front of or behind the associated first resin container 10 in a direction in which the cables extend (on one side or the opposite side of the first resin container 10 in the direction in which the cables extend).

The housing unit 1A may also include one or more third resin containers (not illustrated). The third resin container has a bottom and a lid that are substantially horizontal (flat) and is not provided with a drain portion or a drain water-receiving portion that will be described in detail later. In the housing unit 1A having this configuration, one second resin container 20 is disposed while having its one end positioned in front of or behind the associated first resin container 10 in the direction in which the cables extend, and one third resin container 30 is disposed while having its one end positioned adjacent to the other end of the one second resin container 20. In a case where the housing unit 1A includes one first resin container 10 and a next first resin container 10 that are arranged with a large spacing therebetween, two or more third resin containers are arranged adjacent to each other between one second resin container 20 disposed in front of or behind the one first resin container 10 and a next second resin container 20 disposed in front of or behind the next first resin container 10.

The plurality of resin containers 10 and 20 are arranged in a continuous manner such that their interior spaces communicate with each other. As a result, an elongated tunnel-like underground space 5 is formed inside the plurality of resin containers 10 and 20. In the underground space 5, the cables (the communication line 6 and the power line 7 illustrated in FIG. 1) are laid.

Each first resin container 10 houses a wireless base station 8. In other words, a plurality of wireless base stations 8 are distributed at regular intervals along the gutter 3. The wireless base station 8 is an example of a wireless communication device according to the present invention, and is a device that transmits and receives communication radio waves to and from mobile communication terminals, such as cell phones. The wireless base station 8 is, for example, a base station for 5G (the fifth generation mobile communication system), but is not limited to the base station for 5G. For example, the first resin containers 10 are arranged at positions where the wireless base stations 8 housed in the first resin containers 10 complement each other in terms of the wireless transmission/reception range.

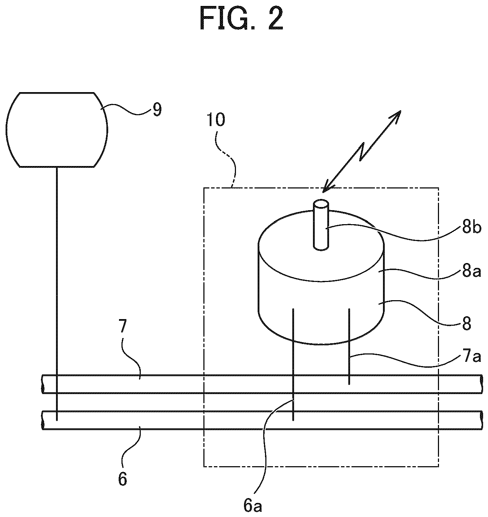

As illustrated in FIG. 2, the wireless base station 8 has a body 8a and an antenna 8b. The body 8a of the wireless base station 8 housed in the first resin container 10 is connected to the communication line 6 via a communication branch line 6a and to the power line 7 via a power branch line 7a. The communication line 6 is connected to a base station body (exchange) 9. The wireless base stations 8 are connected to the base station body 9 via the communication branch lines 6a and the communication line 6. The above-mentioned mobile communication terminals are wirelessly and communicatively connected to the base station body 9 via the wireless base stations 8. The wireless base stations 8 are supplied with drive power from the power line 7 via the power branch lines 7a.

### <First Embodiment>

The first embodiment of the housing unit 1A will be described below. Note that the drawings that will be referred to in the following description illustrate the wireless base station 8 in such a manner that the antenna 8b, which is illustrated in FIG. 2, is omitted while the body 8a is illustrated as the wireless base station 8.

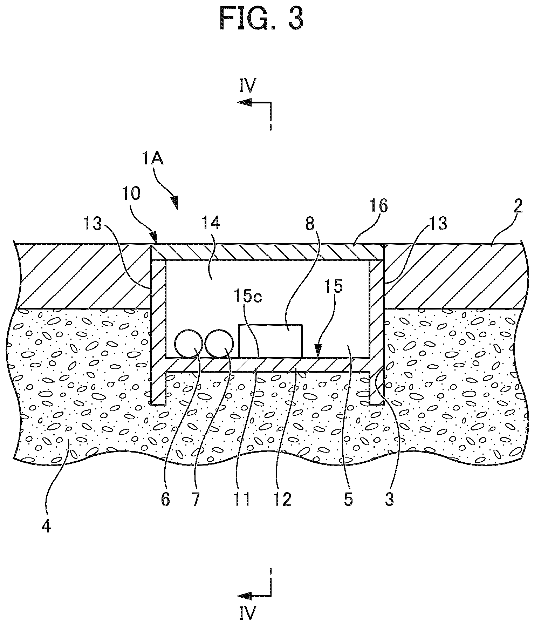

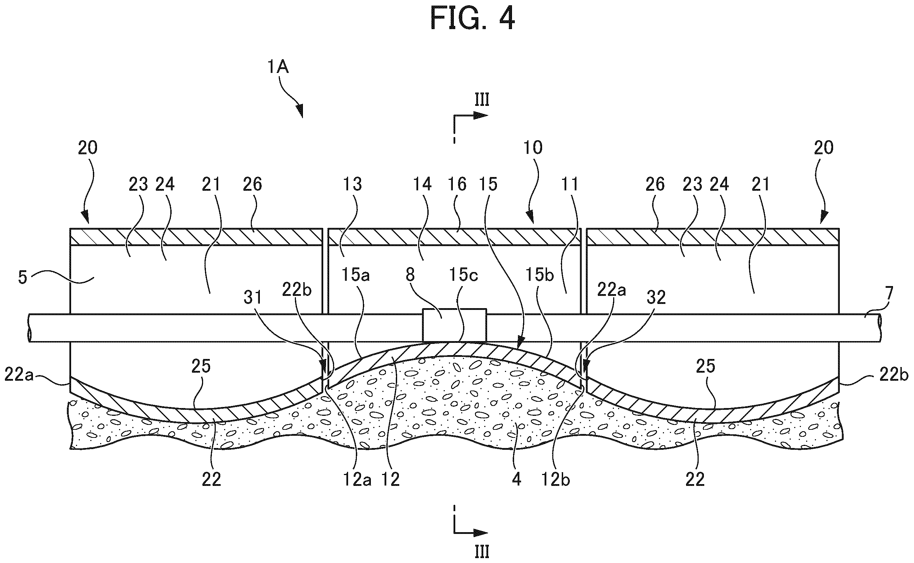

As illustrated in FIGS. 3 and 4, the housing unit 1A according to the first embodiment includes a first resin container 10 having a polygonal tubular shape and housing the wireless base station 8, and second resin containers 20 disposed adjacent to the two opposing ends of the first resin container 10. The first resin container 10 and the second resin containers 20 are arranged in a gutter 3 of a road 2 and are buried in the ground 4, as illustrated in FIG. 1. As described above, the interior spaces of the resin containers 10 and 20 communicate with each other to form an elongated tunnel-like underground space 5 in which a communication line 6 and a power line 7 are laid.

The first resin container 10 has a first container body 11 and a first lid 16. The first container body 11 and the first lid 16 are each a one-piece molding made of a predetermined resin material.

The first container body 11 has the shape of a so-called U-shaped groove and has a first bottom 12, a pair of side walls 13, 13, and a first opening 14 that opens upward.

As illustrated in FIG. 4, the first bottom 12 has one end 12a and the other end 12b that face the adjacent second resin containers 20, respectively. The first bottom 12 has the shape of an arch that curves upward convexly throughout from the one end 12a to the other end 12b. The first bottom 12 has a drain portion 15 on its upper surface.

The drain portion 15 has a crest 15c that is the highest part of the drain portion 15, a curved surface 15a that gradually decreases in height throughout from the crest 15c to the one end 12a, and a curved surface 15b that gradually decreases in height throughout from the crest 15c to the other end 12b. The curved surfaces 15a and 15b curve from the crest 15c to the one end 12a and the other end 12b, respectively, while constantly decreasing in height. The curved surfaces 15a and 15b are each an example of a height varying portion of the present invention.

As illustrated in FIG. 4, the wireless base station 8 is disposed on the crest 15c of the drain portion 15. The wireless base station 8 is held stably on the crest 15c using a fastening member such as a fixing device or a screw.

The first lid 16 is a plate-like member that closes the first opening 14 of the first container body 11. The first lid 16 is made of a resin having radio wave permeability. The first lid 16 is detachably attached to the first container body 11 using a fastening means such as a metal fastener or a rubber band.

As illustrated in FIG. 4, the second resin containers 20 are disposed adjacent to the two opposing ends of the first resin container 10 and each include a second container body 21 and a second lid 26. The second container body 21 and the second lid 26 are each a one-piece molding made of a predetermined resin material.

The second container body 21 has the shape of a so-called U-shaped groove and has a second bottom 22, a pair of side walls 23, 23 (only one of which is illustrated in FIG. 4), and a second opening 24 that opens upward. The second bottom 22 has one end 22a and the other end 22b that face the adjacent first resin container 10.

The second bottom 22 curves concavely throughout from the one end 22a to the other end 22b. The second bottom 22 has a drain water-receiving portion 25 on its upper surface. The drain water-receiving portion 25 has a concave shape to receive water (drain water) flowing down from the drain portion 15 of the first resin container 10. The drain water-receiving portion 25 is constituted by the upper surface of the second bottom 22 that curves concavely.

The second lid 26 is a plate-like member that closes the second opening 24 of the second container body 21. The second lid 26 is detachably attached to the second container body 21 using a fastening means such as a metal fastener or a rubber band.

The housing unit 1A according to the first embodiment is arranged in the gutter 3 illustrated in FIG. 1 such that the second resin containers 20 are disposed adjacent to the two opposing ends of the first resin container 10. The first resin container 10 and the second resin containers 20 are disposed adjacent to each other such that each of the opposing ends of one container faces a corresponding one of the opposing ends of the adjacent container. The first resin container 10 and the second resin containers 20 may be connected to each other with joint members.

As illustrated in FIG. 4, the housing unit 1A according to the first embodiment has a boundary portion 31 between the end 12a of the first bottom 12 of the first resin container 10 and the end 22b of the second bottom 22 of the second resin container 20. Further, the housing unit 1A has a boundary portion 32 between the end 12b of the first bottom 12 of the first resin container 10 and the end 22a of the second bottom 22 of the second resin container 20.

The crest 15c of the drain portion 15 of the first resin container 10 is at a height greater than the height of the boundary portion 31 and the height of the boundary portion 32. The curved surfaces 15a and 15b of the drain portion 15 gradually decrease in height throughout from the crest 15c to the boundary portion 31 and the boundary portion 32, respectively. The drain water-receiving portions 25 of the second resin containers 20 are at a height less than those of the boundary portions 31 and 32, whereby drain water that has flowed along the curved surfaces 15a and 15b of the drain portion 15 and reached the boundary portions 31 and 32 is allowed to cross the boundary portions 31 and 32 and flow into the drain water-receiving portions 25.

Effects exerted by the housing unit 1A according to the first embodiment are described below. The housing unit 1A according to the first embodiment includes the tubular first resin container 10 configured to be buried in the ground 4 and to house the wireless base station 8, and the tubular second resin containers 20 configured to be buried in the ground 4 and to be disposed adjacent to the first resin container 10, and having the interior spaces communicating with the interior space of the first resin container 10. The first resin container 10 includes the drain portion 15 having the crest 15c that is at a height greater than the height of the boundary portions 31 and 32 between the first resin container 10 and the second resin containers 20, and the curved surfaces 15a and 15b that gradually decrease in height throughout from the crest 15c to the boundary portions 31 and 32. Each second resin container 20 has the drain water-receiving portion 25 that is at a height less than the height of the boundary portions 31 and 32 and receives drain water from the drain portion 15.

Specifically, the first resin container 10 includes the first container body 11 having the first bottom 12 and the first opening 14 that opens upward, and includes the first lid 16 closing the first opening 14 of the first container body 11. The second resin containers 20 each include the second container body 21 having the second bottom 22 and the second opening 24 that opens upward, and includes the second lid 26 closing the second opening 24 of the second container body 21. The boundary portions 31 and 32 are provided between the first bottom 12 and the second bottoms 22. The first bottom 12 has the drain portion 15, and each second bottom 22 has the drain water-receiving portion 25 that receives drain water from the drain portion 15. The wireless base station 8 is placed on the crest 15c of the drain portion 15 of the first resin container 10.

According to the first embodiment, when water, such as rainwater, passes between the first container body 11 and the first lid 16 of the first resin container 10 and enters the first container body 11, the water flows down the inner surfaces of the side walls 13 to reach the drain portion 15 on the first bottom 12. After reaching the drain portion 15, the water flows down the curved surface 15a or 15b, crosses the boundary portion 31 or 32 to be drained into the second resin container 20. The water that has been drained into the second resin containers 20 flows into the drain water-receiving portion 25 to be stored there. Part of the water passes through the boundary portions 31 and 32 to penetrate the ground 4, without crossing the boundary portions 31 and 32.

Water that has entered the first resin container 10 is always drained from the drain portion 15 to the drain water-receiving portions 25 of the second resin containers 20, thereby preventing or reducing the accumulation of water in the first resin container 10. Thus, according to the first embodiment, the first resin container 10 in which the wireless base station 8 is housed has sufficient drainage, and is effective in making it unlikely for the wireless base station 8 to be submerged in water in the first resin container 10.

The first resin container 10 and the second resin containers 20 of the present embodiment may have one or more holes in the respective side wall 13 and side wall 26, or the respective bottom 12 and bottom 22. In that case, the holes also allow water that has entered the first resin container 10 and the second resin containers 20 to be discharged to the outside (into the ground 4).

### < Second Embodiment >

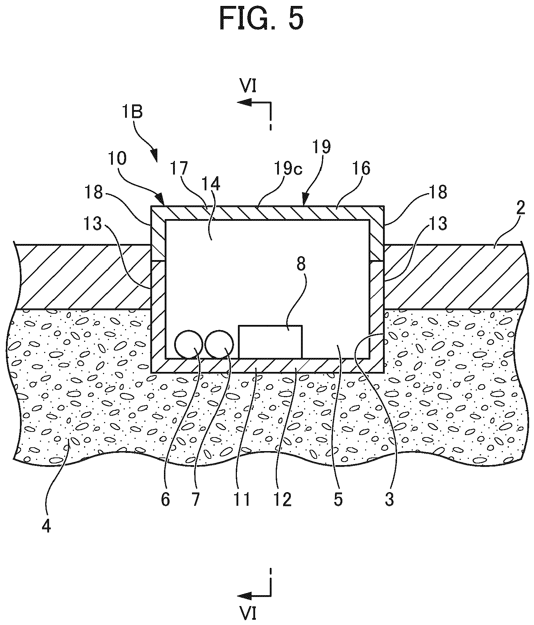

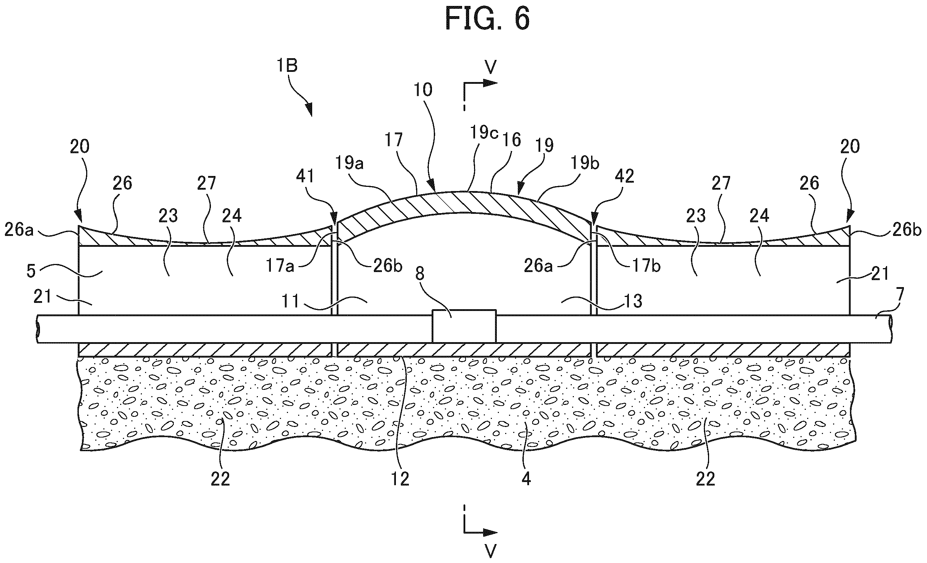

Next, a housing unit 1B according to a second embodiment of the present invention will be described with reference to FIGS. 5 and 6. In the drawings that will be referred to in the description of the second embodiment, the same elements as those of the first embodiment are denoted by the same reference characters. A description of the same elements will be omitted, while differences from the first embodiment will be described.

As shown in FIGS. 5 and 6, a first resin container 10 according to the second embodiment includes a container body 11 having a flat bottom 12, and second resin containers 20 according to the second embodiment each include a container body 21 having a flat bottom 22. The first bottom 12 does not have the drain portion 15 and the second bottom 22 does not have the drain water-receiving portion 25. A wireless base station 8 is placed on the flat first bottom 12.

As illustrated in FIG. 5, the first resin container 10 according to the second embodiment has a first lid 16 that includes a top plate 17 and a pair of side walls 18. As illustrated in FIG. 6, the top plate 17 has one end 17a and the other end 17b that face the adjacent second resin containers 20, respectively. The top plate 17 of the first lid 16 has the shape of an arch that curves upward convexly throughout from the one end 17a to the other end 17b. The top plate portion 17 has a drain portion 19 on its upper surface.

The drain portion 19 has a crest 19c that is the highest part, a curved surface 19a that gradually decreases in height throughout from the crest 19c to the one end 17a, and a curved surface 19b that gradually decreases in height throughout from the crest 19c to the other end 17b. The curved surfaces 19a and 19b curve from the crest 19c to the one end 17a and the other end 17b, respectively, while constantly decreasing in height. The curved surfaces 19a and 19b are each an example of the height varying portion of the present invention.

As shown in FIG. 6, each second resin container 20 according to the second embodiment has a second lid 26 having one end 26a and the other end 26b that face the adjacent first resin container 10. The second lid 26 has an upper surface that curves concavely throughout from the one end 26a to the other end 26b. The second lid 26 has a drain water-receiving portion 27 on its upper surface.

The drain water-receiving portion 27 is a concave portion that receives water (drain water) flowing down from the drain portion 19 of the first lid 16 of the first resin container 10. The drain water-receiving portion 27 is constituted by the upper surface of the second lid 26 that curves concavely.

The housing unit 1B according to the second embodiment has a boundary portion 41 between the end 17a of the top plate 17 forming part of the first lid 16 of the first resin container 10 and the end 26b of the second lid 26 of the second resin container 20. Further, the housing unit 1B has a boundary portion 42 between the end 17b of the top plate 17 forming part of the first lid 16 of the first resin container 10 and the end 26a of the second lid 26 of the second resin container 20.

The crest 19c of the drain portion 19 of the first resin container 10 is at a height greater than the height of the boundary portion 41 and the height of the boundary portion 42. The curved surface 19a and the curved surface 19b of the drain portion 19 gradually decrease in height throughout from the crest 19c to the boundary portion 41 and the boundary portion 42, respectively. The drain water-receiving portions 27 of the second resin containers 20 are at a height less than those of the boundary portions 41 and 42, whereby drain water that has flowed along the curved surfaces 19a and 19b of the drain portion 19 and reached the boundary portions 41 and 42 is allowed to cross the boundary portions 41 and 42 and flow into the drain water-receiving portions 27.

Effects exerted by the housing unit 1B according to the second embodiment are described below. In the housing unit 1B according to the second embodiment, the first resin container 10 includes the first container body 11 having the first bottom 12 and the first opening 14 that opens upward, and includes the first lid 16 closing the first opening 14 of the first container body 11. The second resin containers 20 each include the second container body 21 having the second bottom 22 and the second opening 24 that opens upward, and includes the second lid 26 closing the second opening 24 of the second container body 21. The boundary portion 41 and the boundary portion 42 are provided between the first lid 16 and the second lids 26. The first lid 16 has the drain portion 19, and each second lid 26 has the drain water-receiving portion 27 that receives drain water from the drain portion 19.

According to the second embodiment, when it is raining, for example, the drain portion 19 on the first lid 16 receives rainwater. The rainwater or other water received by the drain portion 19 flows down the curved surfaces 19a and 19b and crosses the boundary portions 41 and 42 to be drained onto the second lids 26 of the second resin containers 20, and then, flows into the drain water-receiving portions 27 to be stored there. Part of the water falls through gaps between the first lid 16 of the first resin container 10 and the second lids 26 of the second resin containers 20 without crossing the boundary portions 41 and 42, and penetrates the ground 4.

As can be seen, water falling onto the first lid 16 of the first resin container 10 is drained from the drain portion 19 of the first resin container 10 to the drain water-receiving portions 27 of the second resin containers 20, thereby reducing or preventing the accumulation of water in the first resin container 10. Thus, according to the second embodiment, the first resin container 10 in which the wireless base station 8 is housed has sufficient drainage, and is effective in making it unlikely for the wireless base station 8 to be submerged in water in the first resin container 10.

Accumulation of water on the first lid 16 may cause a change in permittivity and affect the radio wave characteristics transmitted and received by the wireless base station 8 installed below the first lid 16. To address this, the drain portion 19 of the second embodiment can prevent water from accumulating above the wireless base station 8. This feature makes it unlikely for puddles to form on the first lid 16 even when it rains, and allows stable radio wave characteristics to be obtained.

### < Modifications >

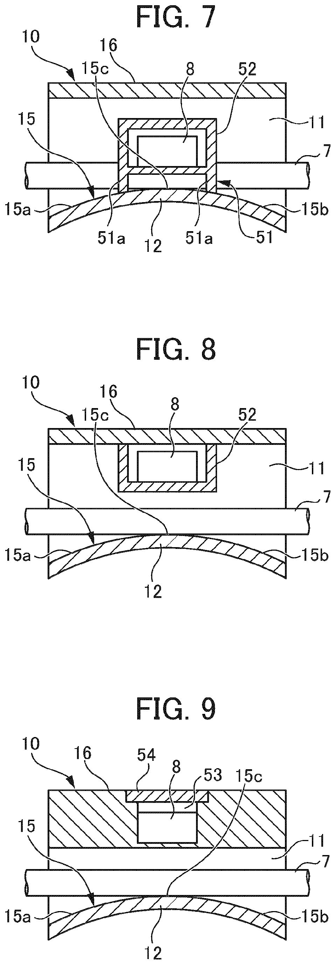

Next, three modifications (first to third modifications) of the above-described first embodiment will be described with reference to FIGS. 7 to 9. The following modifications differ from the first embodiment in the way in which the wireless base station 8 is housed in the first resin container 10.

FIG. 7 illustrates the first modification. According to the first modification, the first container body 11 of the first resin container 10 has a support 51 that is spaced upwardly from the first bottom 12. The support 51 includes a plurality of legs 51a. The support 51 is fixed to the drain portion 15 of the first bottom 12. On top of the support 51, a waterproof case 52 is provided and integrated with the support 51. The wireless base station 8 is housed and sealed in the waterproof case 52 in a liquid-tight manner.

In the first modification, the wireless base station 8 is housed in the waterproof case 52 and supported by the support 51 at a position spaced upwardly from the drain portion 15. This configuration makes it unlikely for the wireless base station 8 to be submerged in water in the first container body 11, and can prevent the wireless base station 8 from coming into contact with water that has entered the first resin container 10.

FIG. 8 illustrates the second modification. According to the second modification, a waterproof case 52 that houses the wireless base station 8 is fixed to the back surface of the first lid 16. In this modification, the first lid 16 forms a support 51 that is spaced upwardly from the first bottom 12.

In the second modification, the wireless base station 8 is supported at a position spaced upwardly from the drain portion 15 by being housed in the waterproof case 52 fixed to the back surface of the first lid 16. This configuration makes it unlikely for the wireless base station 8 to be submerged in water in the first container body 11, and can prevent the wireless base station 8 from coming into contact with water that has entered the first resin container 10. In addition, since the first lid 16 also serves as the support by which the wireless base station 8 is spaced upwardly from the first bottom 12, the support 51 as in the first modification described above can be omitted, thereby reducing an increase in the number of the components.

FIG. 9 illustrates the third modification. The first lid 16 of the third modification has a housing chamber 53 that opens upward. The housing chamber 53 is liquid-tightly sealed with a lid part 54 that is detachably attached to the first lid 16. The wireless base station 8 is housed in the housing chamber 53.

According to the third modification, the wireless base station 8 is housed in the housing chamber 53 of the first lid 16 in a liquid-tight manner. This configuration makes it unlikely for the wireless base station 8 to be submerged in water in the first container body 11, and can prevent the wireless base station 8 from coming into contact with water that has entered the first resin container 10.

It should be noted that the above-described embodiments and modifications of the present invention are not intended to limit the present invention, and appropriate variations may be made to the present invention. For example, the container bodies 11 and 21 of the first embodiment may be combined with the second embodiment such that not only the lids but also the container bodies are provided with the respective drain portions and drain water-receiving portions. Further, the first to third modifications illustrated in FIGS. 7 to 9 may be applied to the second embodiment.

### EXPLANATION OF REFERENCE NUMERALS

- 1A, 1B:: Housing unit
- 4:: Ground
- 6:: Communication line (Cable)
- 7:: Power line (Cable)
- 8:: Wireless base station (Wireless communication device)
- 10:: First resin container
- 11:: First container body
- 12:: First bottom
- 14:: First opening
- 15, 19:: Drain portion
- 15a, 15b, 19a, 19b:: Curved surface (Height varying portion)
- 15c, 19c:: Crest
- 16:: First lid
- 20:: Second resin container
- 21:: Second container body
- 22:: Second bottom
- 24:: Second opening
- 25, 27:: Drain water- receiving portion
- 26:: Second lid
- 31, 32, 41, 42:: Boundary portion
- 51:: Support
- 52:: Waterproof case
- 53:: Housing chamber

## Claims

1. A housing unit comprising resin containers for housing a cable,
the resin containers comprising:
a first resin container configured to house a wireless communication device to which the cable is connected; and
a second resin container configured to be disposed in front of or behind the first resin container in a direction in which the cable extends, and having an interior space that is adapted to communicate with an interior space of the first resin container,
the first resin container including a drain portion having a crest and a height varying portion, the crest being at a height greater than that of a boundary portion between the first resin container and the second resin container, the height varying portion decreasing in height throughout from the crest to the boundary portion,
the second resin container including a drain water-receiving portion that receives drain water from the drain portion, the drain water-receiving portion being at a height less than that of the boundary portion.

2. The housing unit according to claim 1, wherein
the first resin container further includes a first container body and a first lid, the first container body having a first bottom and a first opening that opens upward, the first lid closing the first opening of the first container body,
the second resin container further includes a second container body and a second lid, the second container body having a second bottom and a second opening that opens upward, the second lid closing the second opening of the second container body,
in a state where the second resin container is disposed in front of or behind the first resin container in the direction in which the cable extends, the boundary portion is provided between the first bottom and the second bottom,
the first bottom has the drain portion, and
the second bottom has the drain water-receiving portion.

3. The housing unit according to claim 1, wherein
the first resin container further includes a first container body and a first lid, the first container body having a first bottom and a first opening that opens upward, the first lid closing the first opening of the first container body,
the second resin container further includes a second container body and a second lid, the second container body having a second bottom and a second opening that opens upward, the second lid closing the second opening of the second container body,
in a state where the second resin container is disposed in front of or behind the first resin container in the direction in which the cable extends, the boundary portion is provided between the first lid and the second lid,
the first lid has the drain portion, and
the second lid has the drain water-receiving portion.

4. The housing unit according to claim 2, wherein
the wireless communication device is placed on the crest of the drain portion.

5. The housing unit according to claim 2 or 3, wherein
the first resin container further includes a support that is spaced upwardly from the first bottom, and
the wireless communication device is supported by the support while being housed in a waterproof case.

6. The housing unit according to claim 2 or 3, wherein
the first lid has a housing chamber configured to house and seal the wireless communication device in a liquid-tight manner, and
the wireless communication device is housed in the housing chamber.
